# EUROPÄISCHE PATENTSCHRIFT

(11) **EP 3 379 292 B1**
(45) Veröffentlichungstag und Bekanntmachung des Hinweises auf die Patenterteilung: **15.05.2019**
(21) Anmeldenummer: 18158007.7
(22) Anmeldetag: 22.02.2018
(51) Int. Cl.: G01S 17/46

(54) **VERFAHREN UND VORRICHTUNG ZUR OPTOELEKTRONISCHEN ENTFERUNGSMESSUNG**
METHOD AND DEVICE FOR OPTOELECTRONIC DISTANCE MEASUREMENT
PROCÉDÉ ET DISPOSITIF DE MESURE DE DISTANCE OPTOÉLECTRONIQUE

(30) Priorität: 22.03.2017 DE 102017106217
(43) Veröffentlichungstag der Anmeldung: 26.09.2018
(73) Patentinhaber: Sick AG, 79183 Waldkirch (DE)
(72) Erfinder: Blöhbaum, Frank, 79312 Emmendingen (DE)

(56) Entgegenhaltungen:
- EP-A1- 2 589 981
- US-A1- 2008 106 746

## Beschreibung

Die Erfindung betrifft ein Verfahren zur optoelektronischen Entfernungsmessung, bei welchem die Entfernung über eine Position von unterscheidbaren Lichtpunkten bestimmt wird sowie eine optoelektronische Entfernungsmesseinrichtung.

In Produktionsprozessen erfordern viele Problemstellungen zunehmend intelligente und flexible Technologien, um bei steigender Variantenvielfalt und sinkenden Losgrößen mit vertretbarem Aufwand produzieren und prüfen zu können. Für die intelligente Steuerung bzw. Kontrolle von Produktionsprozessen werden somit zunehmend flexible, präzise, schnelle und berührungslos arbeitende Messsysteme notwendig, die das zu prüfende Objekt oder sich ändernde, eventuell auch sicherheitsrelevante, Situationen möglichst vollständig bildtechnisch erfassen, die Bildinformation in nummerisch verarbeitbare Daten transformieren, die relevanten Dimensionen oder Muster selektieren und diese Informationen zur Steuerung von nachfolgenden Prozessschritten zur Verfügung stellen.

Aus der GB 2 395 261 A ist eine Entfernungsmesseinrichtung bekannt, bei welcher die Entfernung über die Position von unterscheidbaren Punkten bestimmt wird. Allerdings ist diese Entfernungsmessung nur für zweidimensionale Aufgaben möglich.

Aus der EP 1 884 804 A1 ist ein Entfernungsmessgerät bekannt, bei dem je nach Entfernung das Licht in andere geometrische Formen abgebildet wird. Dabei wird eine Mehrzonenabbildungsoptik verwendet.

Die EP 2 589 981 A1 zeigt ein Verfahren und einen Sensor zur Bestimmung von Entfernungen, bei dem ein Punktmuster oder ein anderes Muster erzeugt wird, wobei das Muster, also die relative Lage der Punkte oder Linien, Informationen über die Entfernung enthält.

Die beschriebenen Lösungen weisen allesamt eine erhebliche Komplexität auf und erfordern zusätzlich Optiken und Empfänger für die entsprechenden Entfernungsmesseinrichtungen.

Aus der EP 2 589 981 A1 ist ein weiteres Verfahren zur Entfernungsbestimmung bekannt und aus der US 20080106746 A1 ist ein gattungsgemäßes Verfahren bekannt.

Der Erfindung liegt die Aufgabe zugrunde, ein Verfahren und eine optoelektronische Entfernungsmesseinrichtung anzugeben, bei welchem auch dreidimensionale Gegenstände kompakt und einfach hinsichtlich ihrer Entfernung bewertet werden können.

Erfindungsgemäß ist die Aufgabe dadurch gelöst, dass mindestens ein Paar von Lichtpunkten auf einem sich entlang einer optischen Achse einer Lichtquelle bewegenden Objekt abgebildet wird, wobei aus einem Rotationswinkel der Lichtpunkte des Punktepaares zueinander die Entfernung des sich bewegenden Objektes bestimmt wird. Der Vorteil des Verfahrens besteht darin, dass somit kostengünstig auch dreidimensionale Entfernungsmessaufgaben einfach gelöst werden können.

Die Lichtpunkte des Punktepaares werden durch Phasenverschiebung aus einem Lichtstrahl erzeugt, wobei die Lichtpunkte des Punktepaares bei der Bewegung des Objektes mit einem Rotationswinkel umeinander rotieren, wodurch sich der Rotationswinkel ändert. Durch die Phasenverschiebung lassen sich zwei voneinander abhängige Lichtpunkte eines Punktepaares einfach erzeugen. Dabei wird allein aus dem sich ändernden Rotationswinkel der Lichtpunkte des Punktepaares auf die Entfernung geschlossen. Somit wird der rechentechnische Aufwand zur Bestimmung der Entfernung reduziert.

In einer Ausgestaltung erfolgt die Änderung des Rotationswinkels über einen vorgegebenen Entfernungsbereich. Ausgehend von der vorgegebenen Messaufgabe ist der auszumessende Entfernungsbereich bekannt, so dass sich einfach durch die Einstellung des Rotationswinkels an dem Phasenelement die entsprechende Messaufgabe lösen lässt.

In einer Variante wird eine Vielzahl mit der Bewegungsänderung des Objektes zueinander rotierender Lichtpunkte von Punktepaaren erzeugt, deren einzelne Rotationswinkel zur Auswertung eines 3D-Bildes verwendet werden. Durch die Vielzahl der verwendeten Punktepaare wird ein besonders genaues Ergebnis bei der Entfernungsmessung von 3D-Bildern erreicht.

Nach der Erfindung wird eine Wellenlänge eines die Lichtpunkte erzeugenden Lichtstrahles mindestens einmal verändert, wobei für jede Wellenlänge der Rotationswinkel für das mindestens eine Punktepaar der Lichtpunkte bestimmt wird. Durch die Auswertung der Rotationswinkel für verschiedene Wellenlängen ist eine Fehlerkorrektur der Zuordnung Rotationswinkel - Entfernungswert möglich.

Eine Weiterbildung der Erfindung betrifft eine optoelektronische Entfernungsmesseinrichtung, umfassend eine Beleuchtungseinheit, der ein Objekt zur Darstellung des von der Beleuchtungseinheit ausgesendeten Lichts nachgeordnet ist, sowie ein Bildaufnehmer für die Darstellung auf dem Objekt. Bei einer besonders kompakten und kostengünstigen 3D-Entfernungsmesseinrichtung ist vor der Beleuchtungseinheit ein mindestens ein Punktepaar von Lichtpunkten erzeugendes Phasenelement in dem von der Beleuchtungseinheit ausgesandten Lichtstrahl angeordnet, wobei hinter dem Phasenelement ein parallel zur optischen Achse beweglich ausgebildetes Objekt zur Darstellung des mindestens einen Punktepaares von Lichtpunkten angeordnet ist, wobei die Bildaufnahmeeinheit das mindestens eine auf dem Objekt dargestellte Punktepaar der Lichtpunkte aufzeichnet und aus einem Rotationswinkel der bei der Bewegung des Objektes umeinander rotierenden Lichtpunkte des Punktepaares eine Entfernung des beweglich ausgebildeten Objektes bestimmt. Lediglich durch die Verwendung eines Phasenelementes lässt sich für das sich bewegende Objekt ein kompakter 3D-Entfenungsmesssensor herstellen. Aufgrund dieses konstruktiv einfachen Konzeptes ist die optoelektronische Entfernungsmesseinrichtung geeignet, in herkömmliche Messkonzepte organisch integriert zu werden. Eine besonders gute Eignung besteht für Lichtschrankenkonzepte, wobei bereits vorhandene Baugruppen mit genutzt werden können und so die Funktionalität der Lichtschranke kostengünstig erweitert wird.

Vorteilhafterweise stellt das Phasenelement einen Rotationswinkel zwischen den beiden Lichtpunkten des Punktepaares von 180° ein, wodurch ein zu messender Entfernungsbereich definiert wird. Das heißt, dass nach einem Rotationswinkel von 180°, vorzugsweise im Bereich von +/- 45°, sich dasselbe Bild des Punktepaares der Lichtpunkte ergibt, wie es sich bei einem Rotationswinkel von 0° gezeigt hat.

Zur Einstellung des Entfernungsbereiches ist das Phasenelement programmierbar ausgeführt.

In einer Ausführungsform weisen die Lichtpunkte des Punktepaares eine vorgegebene Struktur auf. Diese vorgegebene Struktur erleichtert der Bildaufnahmeeinheit die Unterscheidung der beiden Lichtpunkte eines Punktepaares.

In einer Ausgestaltung ist die Beleuchtungseinheit als Laserdiode mit einer Kollimationsoptik ausgebildet, wobei eine Wellenlänge der Laserdiode vorzugsweise veränderbar ist. Dies hat den Vorteil, dass die Genauigkeit der Entfernungsmessung, die jeweils für jede der unterschiedlichen Wellenlängen durchgeführt wird, erhöht wird.

Die Erfindung lässt zahlreiche Ausführungsformen zu. Eine davon soll anhand der in der Zeichnung dargestellten Figuren näher erläutert werden.

Es zeigen:
- Fig. 1: ein Ausführungsbeispiel der erfindungsgemäßen Entfernungsmesseinrichtung,
- Fig. 2: eine schematische Darstellung des Rotationswinkels zweier Lichtpunkte eines Punktepaares.

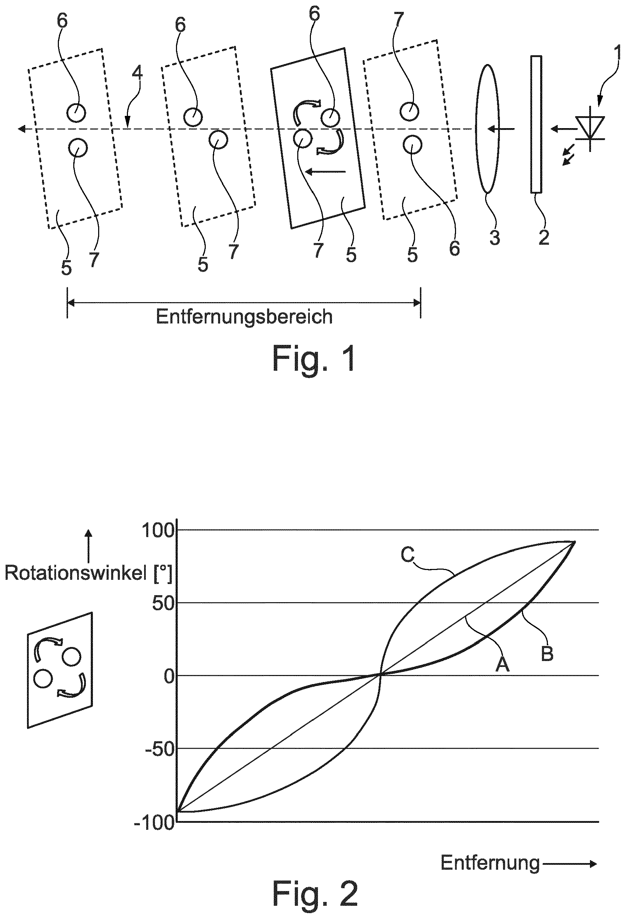

In Fig. 1 ist ein Ausführungsbeispiel der erfindungsgemäßen optoelektronischen Entfernungsmesseinrichtung in Form einer Prinzipdarstellung gezeigt, welche eine Beleuchtungseinheit in Form einer Laserdiode 1 aufweist, vor welcher ein Phasenelement 2 positioniert ist. An das Phasenelement 2 schließt sich eine Kollimationslinse 3 an, hinter welcher wiederum ein sich entlang der optischen Achse 4 bewegendes Objekt 5 angeordnet ist. Ein Entfernungsbereich wird durch die Anfangsposition und die Endposition des sich bewegenden Objektes 5 definiert.

Die Beleuchtungseinheit 1 erzeugt einen kollimierten Strahl (Pfeil), der das Phasenelement 2 durchläuft und anschließend von der Kollimationslinse 3 fokussiert wird. Das Phasenelement 2 ist so ausgeführt, dass auf dem sich bewegenden Objekt 5, das sich in einem vorbestimmten Entfernungsbereich zur Laserdiode 1 befindet, ein Punktepaar von zwei leuchtenden Lichtpunkten 6, 7 sichtbar wird. Wird das Objekt 5 entlang der optischen Achse 4 bewegt, rotieren die beiden Lichtpunkte 6, 7 des Punktepaares mit einem Rotationswinkel θ umeinander.

Ein typischer Verlauf der Rotation der beiden Lichtpunkte 6, 7 des Punktepaares in Abhängigkeit von der Entfernung und einer von der Laserdiode 1 ausgestrahlten Wellenlänge ist in Fig. 2 dargestellt. Die Kurve A zeigt die idealisierte Funktion des Rotationswinkels θ in Abhängigkeit von der Entfernung des sich bewegenden Objektes. Diese Funktion ist im realen Fall typischerweise wellenlängenabhängig. Wird das Phasenelement 2 z. B. für grünes Licht designed, so ergeben sich für die Lichtpunkte 6, 7 die entsprechenden Verläufe der Kurven B, C. Das Phasenelement 2 ist typischerweise so ausgebildet, dass es über den Entfernungsbereich eine 180°-Rotation der Lichtpunkte 6, 7 des Punktepaares auf dem sich bewegenden Objekt 5 einstellt. Die Lichtpunkte 6, 7 werden mit einem nicht weiter dargestellten Matrixsensor, beispielsweise einer CMOS- oder CCD-Kamera inklusive geeigneter Sensorik erfasst. In einer nachgelagerten Recheneinheit wird anschließend der Rotationswinkel θ der beiden Lichtpunkten 6, 7 des Punktepaares bestimmt, woraus ein Entfernungswert ermittelt wird.

Der Entfernungsbereich ist durch die klare Abgrenzung der beiden Lichtpunkte 6, 7 des Punktepaares eindeutig bestimmt, d. h. vor und nach dem Entfernungsbereich sind die beiden Lichtpunkte 6, 7 des Punktepaares nicht mehr klar abgrenzbar und verschmelzen zueinander. Um die Abgrenzung der Lichtpunkte 6, 7 besser zu realisieren, ist die Form der Punkte definiert und kann beispielsweise kreisförmig, polygon, sternförmig oder anders ausgestaltet sein.

Um einen 3D-Sensor zuverlässig anzugeben, wird der Rotationswinkel θ für mindestens zwei oder drei unterschiedliche Wellenlängen des von der Laserdiode 1 ausgesandten Lichtstrahles gemessen. Für jede Wellenläge wird bei der Entfernungsmessung der jeweilige Rotationswinkel θ der zugeordneten Lichtpunkte 6, 7 der Punktepaare bestimmt. Die Entfernungsmessung ist aber nicht auf zwei oder drei Wellenlängen beschränkt, sondern kann auch mit vielen verschiedenen Wellenlängen durchgeführt werden.

Die verschiedenen Wellenlängen werden unter anderem dafür eingesetzt, um das Objekt 5 mit unterschiedlicher spektraler Remission erfassen zu können. Statt diskreter Wellenlängen besteht auch die Möglichkeit, dass die Laserdiode 1 über einen Strahler mit einem kontinuierlichen Spektrum verfügt und beispielsweise als Weißlichtquelle ausgebildet ist. In diesem Fall erfolgt die Auswertung der leuchtenden Lichtpunkte 6, 7 jedes Punktepaares mit einer Farbkamera.

Um den Entfernungsbereich des sich bewegenden Objektes einstellen zu können, ist das Phasenelement 2 programmierbar ausgeführt, was z. B. mithilfe eines Spatial Light Modulator (SLM) erfolgen kann.

Wenn eine Beleuchtungseinheit 1 eine Vielzahl von Lichtstrahlen erzeugt, die auf ein geeignet ausgelegtes Phasenelement 2 projiziert werden, so entsteht eine Vielzahl mit der Entfernung umeinander rotierender Punktepaare von Lichtpunkten 6, 7. Daraus ergibt sich ein Matrixsensor, der die Vielzahl mit der Entfernung umeinander rotierender Lichtpunkte 6, 7 erfasst und anschließend rechentechnisch auswertet, wodurch eine komplette 3D-Kamera realisiert wird. Dies hat den Vorteil des immer noch einfachen Aufbaus, der geringen Komplexität der Signalverarbeitung und eines grundsätzlich machbaren koaxialen Aufbaus.

## Patentansprüche

1. Verfahren zur optoelektronischen Entfernungsmessung, bei welchem die Entfernung über eine Position von unterscheidbaren Lichtpunkten (6, 7) bestimmt wird, wobei mindestens ein Paar von Lichtpunkten (6, 7) auf einem sich entlang einer optischen Achse (4) einer Lichtquelle (1) bewegenden Objekt (5) abgebildet wird, wobei aus einem Rotationswinkel (θ) der Lichtpunkte (6, 7) des Punktepaares zueinander die Entfernung des sich bewegenden Objektes (5) bestimmt wird, wobei die Lichtpunkte (6, 7) des Punktepaares durch Phasenverschiebung aus einem Lichtstrahl erzeugt werden, wobei die Lichtpunkte (6, 7) des Punktepaares bei der Bewegung des Objektes (5) mit dem Rotationswinkel (θ) umeinander rotieren, wobei sich der Rotationswinkel (θ) ändert **dadurch gekennzeichnet dass** eine Wellenlänge des die Lichtpunkte (6, 7) erzeugenden Lichtstrahls bei der Entferungsmessung mindestens einmal verändert wird, wobei für jede Wellenlänge der Rotationswinkel (θ) für das mindestens eine Punktepaar der Lichtpunkte (6, 7) bestimmt wird.

2. Verfahren nach Anspruch 1, **dadurch gekennzeichnet, dass** die Änderung des Rotationswinkels (θ) über einen vorgegebenen Entfernungsbereich des sich bewegenden Objektes (5) erfolgt.

3. Verfahren nach Anspruch 1 oder 2, **dadurch gekennzeichnet, dass** eine Vielzahl von Punktepaaren der mit der Bewegungsänderung des Objektes (5) umeinander rotierende Lichtpunkte (6, 7) erzeugt wird, deren einzelne Rotationswinkel (θ) zur Auswertung eines 3D-Bildes verwendet werden.

4. Optoelektronische Entfernungsmesseinrichtung, umfassend eine Beleuchtungseinheit (1), der ein Objekt (5) zur Darstellung des von der Beleuchtungseinheit (1) ausgesandten Lichts nachgeordnet ist, sowie einen Bildaufnehmer zur Aufzeichnung der auf dem Objekt (5) auftreffenden Darstellung, **dadurch gekennzeichnet, dass** vor der Beleuchtungseinheit (1) ein mindestens ein Punktepaar von Lichtpunkten (6, 7) erzeugendes Phasenelement (2) in dem von der Beleuchtungseinheit (1) ausgesandten Lichtstrahl angeordnet ist, wobei hinter dem Phasenelement (2) ein parallel zur optischen Achse (4) beweglich ausgebildetes Objekt (5) zur Darstellung des mindestens einen Punktepaares von Lichtpunkten (6, 7) angeordnet ist, wobei die Bildaufnahmeeinheit das mindestens eine auf dem Objekt (5) dargestellte Punktepaar der Lichtpunkte (6, 7) aufzeichnet und aus einem Rotationswinkel (θ) der bei der Bewegung des Objektes (5) umeinander rotierenden Lichtpunkte (6, 7) des Punktepaares eine Entfernung des beweglich ausgebildeten Objektes (5) bestimmt und dass eine Wellenlänge des die Lichtpunkte (6, 7) erzeugenden Lichtstrahls bei der Entfernungsmessung mindestens einmal verändert wird, wobei für jede Wellenlänge der Rotationswinkel (θ) für das mindestens eine Punktepaar der Lichtpunkte (6, 7) bestimmt wird.

5. Entfernungsmesseinrichtung nach Anspruch 4, **dadurch gekennzeichnet, dass** die Lichtpunkte (6, 7) des Punktepaares eine vorgegebene Struktur aufweisen.

6. Entfernungsmesseinrichtung nach mindestens einem der Ansprüche 4 oder 5, **dadurch gekennzeichnet, dass** die Beleuchtungseinheit als Laserdiode (1) mit einer Kollimationsoptik (3) ausgebildet ist, wobei eine Wellenlänge der Laserdiode (1) vorzugsweise veränderbar ist.

## Claims

1. Method for optoelectronic distance measurement, in which the distance is determined via a position of distinguishable light points (6, 7), wherein at least one pair of light points (6, 7) is imaged on an object (5) moving along an optical axis (4) of a light source (1), wherein the distance of the moving object (5) is determined from an angle of rotation (θ) of the light points (6, 7) of the pair of points with respect to one another, wherein the light points (6, 7) are generated from a light beam by phase shift, the light points (6, 7) of the pair of points rotating about one another with the angle of rotation (θ) during the movement of the object (5) while the angle of rotation (θ) is changing, **characterized in that** a wavelength of the light beam generating the light points (6, 7) is changed at least once during the distance measurement, the angle of rotation (θ) for the at least one pair of points (6, 7) being determined for each wavelength.

2. Method according to claim 1, **characterized in that** the change in the angle of rotation (θ) takes place over a predetermined distance range of the moving object (5).

3. A method according to claim 1 or 2, **characterized in that** a plurality of pairs of points of light (6, 7) rotating about each other with the change of movement of the object (5) are generated, the individual rotation angles (θ) of which are used to evaluate a 3D image.

4. Optoelectronic distance measuring device, comprising an illumination unit (1), to which an object (5) for representing the light emitted by the illumination unit (1) is arranged downstream, and an image sensor for recording the representation impinging on the object (5), **characterized in that** a phase element (2) generating at least one pair of points of light (6, 7) is arranged in front of the illumination unit (1) in the light beam emitted by the illumination unit (1), a movable object (5) being movable parallel to the optical axis (4) and being arranged behind the phase element (2) to present the at least one pair of points of light (6, 7), the image sensor recording the at least one pair of points of light (6, 7) represented on the object (5), and determines a distance of the movably formed object (5) from a rotation angle (θ) of the light points (6, 7) rotating about one another during the movement of the object (5) and **in that** a wavelength of the light beam generating the light points (6, 7) is changed at least once during the distance measurement, the angle of rotation (θ) for the at least one pair of points of the light points (6, 7) being determined for each wavelength.

5. Distance measuring device according to claim 4, **characterized in that** the light points (6, 7) of the pair of points have a predetermined structure.

6. Distance measuring device according to at least one of claims 4 or 5, **characterized in that** the illumination unit is designed as a laser diode (1) with collimating optics (3), a wavelength of the laser diode (1) preferably being variable.

## Revendications

1. Procédé de mesure optoélectronique de la distance, dans lequel la distance est déterminée par d'une position de points lumineux (6, 7) distinguables, dans lequel au moins une paire de points lumineux (6, 7) est représentée sur un objet (5) se déplaçant le long d'un axe optique (4) d'une source lumineuse (1), la distance de l'objet mobile (5) étant déterminée par un angle de rotation (θ) des points lumineux (6, 7) des deux points lumineux les uns par rapport aux autres, les points lumineux (6, 7) sont générés à partir d'un faisceau lumineux par déphasage, les points lumineux (6, 7) de la paire de points tournant l'un autour de l'autre avec l'angle de rotation (θ) pendant le déplacement de l'objet (5) pendant que l'angle de rotation (θ) change, **caractérisé en ce que** la longueur d'onde du faisceau lumineux produisant les points lumineux (6, 7) est modifiée au moins une fois pendant la mesure de distance, l'angle de rotation (θ) pour la au moins une paire de points (6, 7) étant déterminé pour chaque longueur d'onde.

2. Procédé selon la revendication 1, **caractérisé en ce que** la modification de l'angle de rotation (θ) s'effectue sur une distance prédéterminée de l'objet mobile (5).

3. Procédé selon la revendication 1 ou 2, **caractérisé en ce qu'**on génère une pluralité de paires de points lumineux (6, 7) tournant les uns autour des autres avec le changement de mouvement de l'objet (5), dont les angles de rotation individuels (θ) sont utilisés pour évaluer une image 3D.

4. Dispositif optoélectronique de mesure de distance, comprenant une unité d'éclairage (1), à laquelle est disposé en aval un objet (5) pour représenter la lumière émise par l'unité d'éclairage (1), et un capteur d'image pour enregistrer la représentation frappant l'objet (5), **caractérisé en ce qu'**un élément de phase (2) génère au moins deux points lumineux (6, 7) est disposé devant l'unité d'éclairage (1) dans le faisceau lumineux émis par l'unité d'éclairage (1), un objet mobile (5) pouvant être déplacé parallèlement à l'axe optique (4) et étant disposé derrière l'élément de phase (2) pour présenter la au moins une paire de points lumineux (6, 7), le capteur d'image enregistrant l'au moins une paire de points lumineux (6, 7) représentés sur l'objet (5), et détermine une distance de l'objet (5) mobile à partir d'un angle de rotation (θ) des points lumineux (6, 7) tournant les uns autour des autres pendant le déplacement de l'objet (5) et **en ce que** pendant la mesure de distance, on modifie au moins une longueur d'onde du faisceau lumineux produisant les points lumineux (6, 7), pour chacune d'elles l'au moins une paire des points lumineux (6, 7) on détermine l'angle de rotation (θ).

5. Dispositif de mesure de distance selon larevendication 4, **caractérisé en ce que** les points lumineux (6, 7) de la paire de points ont une structure prédéterminée.

6. Dispositif de mesure de distance selon au moins l'une des revendications 4 ou 5, **caractérisé en ce que** l'unité d'éclairage est conçue comme une diode laser (1) avec une optique de collimation (3), une longueur d'onde de la diode laser (1) étant de préférence variable.
